# EUROPÄISCHE PATENTSCHRIFT

(11) **EP 3 126 731 B1**
(45) Veröffentlichungstag und Bekanntmachung des Hinweises auf die Patenterteilung: **05.12.2018**
(21) Anmeldenummer: 15713684.7
(22) Anmeldetag: 26.03.2015
(51) Int. Cl.: F16M 11/04

(54) **VORRICHTUNG UND VERFAHREN ZUM BEFESTIGEN EINES OPTISCHEN GERÄTES**
DEVICE AND METHOD FOR FIXING AN OPTICAL DEVICE
DISPOSITIF ET PROCÉDÉ DESTINÉS À LA FIXATION D'UN APPAREIL OPTIQUE

(30) Priorität: 31.03.2014 EP 14162673
(43) Veröffentlichungstag der Anmeldung: 08.02.2017
(73) Patentinhaber: Hilti Aktiengesellschaft, 9494 Schaan (LI)
(72) Erfinder: CRAMER, Till, 7307 Jenins (CH); SIEGLER, Ralf, 88289 Waldburg (DE)
(74) Vertreter: Hilti Aktiengesellschaft Corporate Intellectual Property
(86) Internationale Anmeldenummer: PCT/EP2015/056487
(87) Internationale Veröffentlichungsnummer: WO 2015/150202

(56) Entgegenhaltungen:
- DE-B- 1 256 901
- DE-C- 196 030

## Beschreibung

### Technisches Gebiet

Die vorliegende Erfindung betrifft eine Vorrichtung zum Befestigen eines optischen Gerätes an einer Halteinrichtung gemäß dem Oberbegriff des Anspruchs 1 sowie ein Verfahren zum Befestigen eines optischen Gerätes gemäß dem Oberbegriff des Anspruchs 15.

### Stand der Technik

Beim Einsatz von optischen Geräten werden Halteeinrichtungen eingesetzt, um ein optisches Gerät in der gewünschten Position anzuordnen. Für den schnellen Wechsel von optischen Geräten an Stativen sind Schnellwechseladapter bekannt, die eine nicht-geschraubte Verbindung des optischen Gerätes mit dem Stativ erlauben. Die bekannten Schnellwechseladapter umfassen eine Klemmplatte, die am optischen Gerät befestigt wird, und eine Befestigungsplatte, die am Stativ befestigt wird, wobei die Klemmplatte über einen Klemmmechanismus an der Befestigungsplatte befestigbar ist. EP 0 982 613 B1 offenbart einen Schnellwechseladapter mit einer Klemmplatte und einer Befestigungsplatte, die eine schwalbenschwanzförmige Führung mit einer feststehenden ersten Profilnut und einer, über einen Klemmmechanismus verstellbaren, zweiten Profilnut aufweist. Zur Befestigung wird die Klemmplatte in die Profilnuten eingeführt und die zweite Profilnut wird durch den Klemmmechanismus gegen die Befestigungsplatte gezogen, so dass die Klemmplatte an der Führung der Befestigungsplatte fixiert ist. Diese Art von Schnellwechseladaptern hat sich als zuverlässig und gut handhabbar bewährt, jedoch sind die bekannten Schnellwechseladapter unflexibel bezüglich unterschiedlicher Klemmplatten, da diese exakt auf die schwalbenschwanzförmige Führung der Befestigungsplatte abgestimmt sein müssen. Außerdem müssen die Klemmplatten an das jeweilige optische Gerät angepasst sein.

DE 1 256 901 B und DE 196 030 C offenbaren bekannte Vorrichtungen zum Befestigen eines optischen Gerätes auf einer Halteeinrichtung. Die Vorrichtungen umfasst ein Gehäuse mit mehreren Gehäuseteilen, eine Betätigungseinrichtung mit einem verstellbaren Betätigungselement, eine Spreizhülse mit mehreren Spreizsegmenten, die zwischen einem geschlossenen Zustand und einem gespreizten Zustand verstellbar sind, und eine erste Verstelleinrichtung, die eine Bewegung der Betätigungseinrichtung in eine Radialbewegung der Spreizsegmente umwandelt. Die Spreizsegmente sind im geschlossenen Zustand der Spreizhülse in die Aufnahmeöffnung des optischen Gerätes einführbar sind und im gespreizten Zustand der Spreizhülse eine kraft- oder formschlüssige Verbindung mit der Aufnahmeöffnung des optischen Gerätes bilden.

### Darstellung der Erfindung

Die Aufgabe der vorliegenden Erfindung besteht demgegenüber darin, Schnellwechseladapter für optische Geräte zu entwickeln, die für alle optischen Geräte mit einer normierten Gewindeaufnahme geeignet sind. Dabei sollen die gute Handhabbarkeit und die hohe Zuverlässigkeit bekannter Schnellwechseladapter beibehalten werden.

Diese Aufgabe wird bei der eingangs genannten Vorrichtung zum Befestigen eines optischen Gerätes erfindungsgemäß durch die Merkmale des unabhängigen Anspruchs 1 und bei dem eingangs genannten Verfahren zum Befestigen eines optischen Gerätes durch die Merkmale des unabhängigen Anspruchs 15 gelöst. Vorteilhafte Weiterbildungen sind in den abhängigen Ansprüchen angegeben.

Die erfindungsgemäße Vorrichtung zum Befestigen eines optischen Gerätes, das eine zylinderförmige Aufnahmeöffnung umfasst, auf einer Halteeinrichtung, weist auf:
▪ ein Gehäuse mit mehreren Gehäuseteilen,
▪ eine Betätigungseinrichtung mit einem verstellbaren Betätigungselement,
▪ eine Spreizhülse mit mehreren Spreizsegmenten, die in einer Ebene senkrecht zu einer Längsachse der Spreizhülse zwischen einem geschlossenen Zustand und einem gespreizten Zustand verstellbar sind, und
▪ eine erste Verstelleinrichtung, die eine Bewegung der Betätigungseinrichtung in eine Radialbewegung der Spreizsegmente in der Ebene senkrecht zur Längsachse der Spreizhülse umwandelt,
wobei die Spreizsegmente im geschlossenen Zustand der Spreizhülse in die Aufnahmeöffnung des optischen Gerätes einführbar sind und im gespreizten Zustand der Spreizhülse eine kraft- oder formschlüssige Verbindung mit der Aufnahmeöffnung des optischen Gerätes bilden. Die erfindungsgemäße Vorrichtung zum Befestigen eines optischen Gerätes ist dadurch gekennzeichnet, dass die Vorrichtung einen Spannring und eine zweite Verstelleinrichtung aufweist, wobei die zweite Verstelleinrichtung eine Bewegung der Betätigungseinrichtung in eine Bewegung des Spannringes in Axialrichtung umwandelt.

Die erfindungsgemäße Vorrichtung ermöglicht es, ein optisches Gerät mit Hilfe des verstellbaren Betätigungselementes auf einer Halteeinrichtung zu befestigen. Dazu wird das optische Gerät mit der Aufnahmeöffnung auf die Spreizhülse aufgesteckt, die sich im geschlossenen Zustand befindet. Anschließend werden die Spreizsegmente mittels der Betätigungseinrichtung und der ersten Verstelleinrichtung in der Ebene senkrecht zur Längsachse der Spreizhülse gespreizt. Im gespreizten Zustand bilden die Spreizsegmente mit der Aufnahmeöffnung des optischen Gerätes eine kraft- oder formschlüssige Verbindung. Mit Hilfe des Spannringes, der mittels der zweiten Verstelleinrichtung verstellbar ist, kann eine Verkippung des optischen Gerätes gegenüber den Längsachsen vermieden oder zumindest behoben werden. Die konstruktive Ausgestaltung der zweiten Verstelleinrichtung ist unabhängig von der ersten Verstelleinrichtung mit Kernstift und Spreizhülse. Daher können bevorzugte Ausgestaltungen der ersten Verstelleinrichtung in beliebiger Weise mit bevorzugten Ausgestaltungen der zweiten Verstelleinrichtung kombiniert werden.

Unter dem Begriff "optische Geräte" werden im Rahmen der vorliegenden Erfindung alle Geräte zusammengefasst, die eine optische oder elektro-optische Komponente einsetzen. Beispiele für optische Geräte sind Laserempfänger, Laserdistanzmessgeräte, Linienlasergeräte, Rotationslasergeräte, Fotokameras und Videokameras. Allen optischen Geräten ist gemeinsam, dass sie im Gehäuse eine zylinderförmige Aufnahmeöffnung aufweisen, über die das optische Gerät an einer Halteeinrichtung befestigt werden kann. Die Grundfläche der Aufnahmeöffnung kann kreisförmig, quadratisch, mehreckig oder mit einer sonstigen Querschnittsform ausgebildet sein. Bei einer Aufnahmeöffnung mit kreisförmiger Grundfläche kann auf der Mantelfläche zusätzlich ein Innengewinde vorgesehen sein, das mit einem komplementär ausgebildeten Außengewinde einer Halteeinrichtung eine Gewindeverbindung bilden kann.

Bei Halteeinrichtungen wird zwischen Stativen, die freistehend auf einen Untergrund positioniert werden, mobilen Halteeinrichtungen und feststehenden Halteeinrichtungen unterschieden. Mobile Halteeinrichtungen werden vom Bediener in der Hand gehalten und können im Raum bewegt werden, wie beispielsweise Messlatten, Nivellierlatten und Lotstöcke. Feststehende Halteeinrichtungen nutzen Elemente in der Messumgebung, die eine andere Funktion innehaben und vom Bediener genutzt werden; Beispiele für feststehende Halteeinrichtungen sind Wandadapter, Schienenadapter, Rohradapter und Magnetadapter. Die erfindungsgemäße Vorrichtung eignet sich für alle Halteeinrichtungen, die ein optisches Gerät über eine Gewindeverbindung befestigen. Die Halteeinrichtungen weisen eine Schraube auf, die in eine passende Gewindeaufnahme am optischen Gerät geschraubt wird.

Bevorzugt ist die erste Verstelleinrichtung als ein entlang einer Axialrichtung verstellbarer Kernstift ausgebildet, wobei der Kernstift von den Spreizsegmenten umgeben ist und die Axialrichtung parallel zur Längsachse der Spreizhülse verläuft. Der Kernstift ist von den Spreizsegmenten der Spreizhülse umgeben, die in einer Radialebene senkrecht zur Längsachse des Kernstiftes verstellbar sind. Die Translationsbewegung des Kernstiftes in Axialrichtung wird in eine Radialbewegung der Spreizsegmente senkrecht zur Längsachse des Kernstiftes umgewandelt. Durch die Radialbewegung der Spreizsegmente ist die Spreizhülse zwischen dem geschlossenen Zustand und dem gespreizten Zustand verstellbar.

Als Axialrichtung sind alle Richtungen parallel zur Längsachse der Spreizhülse definiert und als Radialebene alle Ebenen, die senkrecht zur Längsachse der Spreizhülse angeordnet sind. Die Radialrichtung ist eine Richtung, die in einer Radialebene verläuft und die Längsachse der Spreizhülse schneidet.

Besonders bevorzugt weist der Kernstift einen Konusabschnitt mit konusförmigen Außenflächen auf und die Spreizsegmente weisen komplementär ausgebildete, konusförmige Innenflächen auf, wobei die Innenflächen der Spreizsegmente während der Bewegung des Kernstiftes in Axialrichtung entlang der Außenflächen des Kernstiftes gleiten. Die Translationsbewegung des Kernstiftes in Axialrichtung wird über den Konusabschnitt in die Radialbewegung der Spreizsegmente umgewandelt. Durch die Ausbildung der konusförmigen Außenflächen am Kernstift und der konusförmigen Innenflächen an den Spreizsegmenten lässt sich die Bewegung des Kernstiftes in Axialrichtung in die Radialbewegung der Spreizsegmente umwandeln.

Die konusförmigen Außenflächen des Kernstiftes können in eine gemeinsame Fläche, beispielsweise eine Kegel- oder Kegelstumpffläche Integriert sein, oder die konusförmigen Außenflächen setzen sich aus mehreren konusförmigen Teilflächen zusammen. Eine konusförmige Fläche ist eine Rotationsfläche, die durch eine um eine Achse rotierende Kurve entsteht. Für die Umwandlung der Translationsbewegung des Kernstiftes in Axialrichtung in die Radialbewegung der Spreizsegmente ist wichtig, dass die einander zugeordneten Außenflächen und Innenflächen komplementär ausgebildet sind.

Besonders bevorzugt weist der Kernstift neben dem Konusabschnitt einen Stufenabschnitt und einen Zylinderabschnitt auf, wobei der Zylinderabschnitt von einem ersten Federelement, das zwischen dem verstellbaren Stufenabschnitt und einem der feststehenden Gehäuseteile des Gehäuses eingespannt ist, umgeben ist. Wenn der Kernstift in Axialrichtung auf die Spreizhülse zu bewegt wird, wird das erste Federelement komprimiert. Das erste Federeiement ist bevorzugt als Rückstellfeder ausgebildet und sorgt dafür, dass die Spreizsegmente bei der Rückbewegung des Betätigungselementes in ihre Ausgangsposition zurück bewegt werden.

Besonders bevorzugt weisen die Spreizsegmente an ihren Innenflächen jeweils ein erstes Führungselement auf und der Kernstift weist an den Außenflächen komplementär ausgebildete, zweite Führungselemente auf, wobei die Spreizsegmente während der Bewegung des Kernstiftes in Axialrichtung mittels der ersten und zweiten Führungselemente geführt sind.

Die Führungselemente, die beispielsweise als Schwalbenschwanzführung ausgebildet sind, stellen sicher, dass die Spreizsegmente beim Öffnen der Verbindung vom Kernstift aus dem gespreizten Zustand in den geschlossenen Zustand bewegt werden.

Die ersten Führungselemente der Spreizsegmente sind besonders bevorzugt als Vorsprung und die zweiten Führungselemente des Kernstiftes als komplementär ausgebildete Nuten ausgebildet. Diese Ausbildung der Führungselemente erlaubt eine kompakte Gestaltung der Spreizhülse.

In einer bevorzugten Ausführung weisen die Spreizsegmente an der Außenseite jeweils einen Verbindungsabschnitt und einen Ringbundabschnitt auf, wobei die Verbindungsabschnitte im gespreizten Zustand eine kraft- oder formschlüssige Verbindung mit der Aufnahmeöffnung des optischen Gerätes bilden und die Ringbundabschnitte im gespreizten Zustand in Axialrichtung eine formschlüssige Verbindung mit einem der feststehenden Gehäuseteile des Gehäuses bilden. Die Verbindungsabschnitte werden in die Aufnahmeöffnung des optischen Gerätes eingeführt und können mit der Aufnahmeöffnung eine kraft- oder formschlüssige Verbindung bilden. Dabei hängt die Art der Verbindung, Kraftschluss oder Formschluss, von der Außengeometrie der Verbindungsabschnitte ab. Die Ringbundabschnitte dienen dazu, das optische Gerät gegen eine Translationsbewegung in Axialrichtung zu sichern. Durch die Radialbewegung der Spreizsegmente können die Ringbundabschnitte eines der feststehenden Gehäuseteile hintergreifen und das optische Gerät auf dem Adapter fixieren. Die Ringbundabschnitte der Spreizsegmente können einteilig ausgebildet sein oder aus mehreren Teilen bestehen.

Besonders bevorzugt weisen die Verbindungsabschnitte der Spreizsegmente ein Außengewinde auf, wobei das Außengewinde mit einer als Gewindeaufnahme ausgebildeten Aufnahmeöffnung des optischen Gerätes im gespreizten Zustand eine formschlüssige Verbindung bildet. Dabei sind die Eigenschaften des Außengewindes besonders bevorzugt an das Innengewinde der Gewindeaufnahme angepasst.

Die Spreizsegmente stehen an der Innenseite über konusförmige Innenflächen mit dem Kernstift in Kontakt; die Innenflächen der Spreizsegmente gleiten entlang der Außenflächen des Kernstiftes. Die Spreizsegmente werden in die Aufnahmeöffnung des optischen Gerätes eingeführt und können an der Außenseite mit der Aufnahmeöffnung eine kraft- oder formschlüssige Verbindung bilden. Die konstruktive Ausgestaltung der Spreizsegmente an den Innenseiten ist unabhängig von der konstruktiven Ausgestaltung der Spreizsegmente an den Außenseiten. Daher können bevorzugte Ausgestaltungen der Spreizsegmente an der Innenseite, wie konusförmige Innenfläche und Führungselement, in beliebiger Weise mit bevorzugten Ausgestaltungen der Spreizsegmente an der Außenseite, wie Verbindungsabschnitt und Ringbundabschnitt, kombiniert werden.

Besonders bevorzugt umfasst die zweite Verstelleinrichtung eine Druckplatte und mehrere Zylinderstifte, wobei die Zylinderstifte von zweiten Federelementen umgeben sind, die zwischen der verstellbaren Druckplatte und einem der feststehenden Gehäuseteile des Gehäuses eingespannt sind. Wenn die Druckplatte in Axialrichtung auf die Spreizhülse zu bewegt wird, werden die zweiten Federelemente komprimiert. Die zweiten Federelemente sind bevorzugt als Rückstellfedern ausgebildet und sorgen dafür, dass die Druckplatte bei der Rückbewegung des Betätigungselementes in ihre Ausgangsposition zurück bewegt wird.

Besonders bevorzugt ist das Betätigungselement zwischen einer ersten Position, einer zweiten Position und einer dritten Position verstellbar, wobei die erste Verstelleinrichtung die Bewegung des Betätigungselementes zwischen der ersten und zweiten Position in die Radialbewegung der Spreizsegmente in der Ebene senkrecht zur Längsachse der Spreizhülse umwandelt und die zweite Verstelleinrichtung die Bewegung des Betätigungselementes zwischen der zweiten und dritten Position in die Bewegung des Spannringes umwandelt.

Besonders bevorzugt umfasst die Betätigungseinrichtung eine Steuerungsscheibe mit einem ersten Steuerungsbereich und einem zweiten Steuerungsbereich, wobei der erste Steuerungsbereich den Kernstift in Axialrichtung bewegt und der zweite Steuerungsbereich die Druckplatte in Axialrichtung bewegt. Der Verstellbereich der Betätigungseinrichtung ist in zwei Winkelbereiche unterteilt, im ersten Winkelbereich wird der Kernstift vom ersten Steuerungsbereich in Axialrichtung bewegt und im zweiten Winkelbereich wird die Druckplatte vom zweiten Steuerungsbereich in Axialrichtung bewegt. Dabei sind die Steuerungskurven des ersten und zweiten Steuerungsbereiches bevorzugt so aufeinander abgestimmt, dass im ersten Winkelbereich ausschließlich der Kernstift und im zweiten Winkelbereich ausschließlich die Druckplatte in Axialrichtung bewegt wird.

Die vorliegende Erfindung betrifft weiterhin eine Halteeinrichtung mit einer erfindungsgemäßen Vorrichtung zum Befestigen eines optischen Gerätes. In einer ersten bevorzugten Variante ist die erfindungsgemäße Vorrichtung zum Befestigen eines optischen Gerätes lösbar mit der Halteeinrichtung verbindbar, so dass die Vorrichtung bei herkömmlichen Halteeinrichtungen nachgerüstet werden kann. In einer zweiten bevorzugten Variante ist die erfindungsgemäße Vorrichtung zum Befestigen eines optischen Gerätes nicht-lösbar mit der Halteeinrichtung verbunden. Die zweite Variante eignet sich vor allem für neue Halteeinrichtungen, die kompakter ausgebildet sein können. Alle optischen Geräte mit einer normierten Gewindeverbindung können an der Halteeinrichtung befestigt werden.

Die erfindungsgemäße Vorrichtung hat den Vorteil, dass keine Änderungen an der Gewindeverbindung der optischen Geräte erforderlich sind. Da die Gewindeverbindung der optischen Geräte nicht verändert wird, können alle optische Geräte sowohl an herkömmlichen Halteeinrichtungen befestigt werden als auch an Halteeinrichtungen, die die vorliegende Erfindung einsetzen.

Das Verfahren zum Befestigen eines optischen Gerätes, das eine zylinderförmige Aufnahmeöffnung umfasst, auf einem Schnellmontageadapter das die Schritte aufweist, dass:
▪ das optische Gerät mit der Aufnahmeöffnung auf eine Spreizhülse mit mehreren verstellbaren Spreizsegmenten aufgesteckt wird, wobei sich die Spreizhülse in einem geschlossenen Zustand befindet, und
▪ die Spreizsegmente mittels einer Betätigungseinrichtung und einer ersten Verstelleinrichtung in einer Ebene senkrecht zu einer Längsachse der Spreizhülse aus dem geschlossenen Zustand in einen gespreizten Zustand überführt werden, wobei die Spreizsegmente im gespreizten Zustand mit der Aufnahmeöffnung des optischen Gerätes eine kraft- oder formschlüssige Verbindung bilden,
ist erfindungsgemäß dadurch gekennzeichnet, dass nach dem Überführen der Spreizhülse in den gespreizten Zustand ein Spannring mittels der Betätigungseinrichtung und einer zweiten Verstelleinrichtung in einer Axialrichtung parallel zur Längsachse der Spreizhülse auf das optische Gerät zu bewegt wird.

Das erfindungsgemäße Verfahren hat den Vorteil, dass ein optisches Gerät mit Hilfe eines verstellbaren Betätigungselementes auf einem Stativ zu befestigen. Das optische Gerät lässt sich einfach und schnell vom Bediener auf dem Stativ befestigen oder vom Stativ lösen. Das aufwendige Öffnen und Schließen der Gewindeverbindung entfällt. Mit Hilfe des Spannringes, der mittels der zweiten Verstelleinrichtung verstellbar ist, kann eine Verkippung des optischen Gerätes gegenüber den Längsachsen verhindert oder zumindest behoben werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: ein Gerätesystem mit einem Rotationslaser, der mit Hilfe eines erfindungsgemäßen Schnellmontageadapters an einem Stativ befestigt ist, (FIG. 1A) und den Schnellmontageadapter der FIG. 1A in einer vergrößerten Darstellung (FIG. 1B);
- FIG. 2: den Schnellmontageadapter der FIG. 1B mit einem Gehäuse, einer Betätigungseinrichtung und einer Spreizhülse, die zwischen einem geschlossenen und gespreizten Zustand verstellbar ist, in einem Längsschnitt;
- FIG. 3: die Betätigungseinrichtung des Schnellmontageadapters der FIG. 1B in einer vergrößerten dreidimensionalen Darstellung;
- FIG. 4: die Spreizhülse des Schnellmontageadapters der FIG. 1B, die mittels der Betätigungseinrichtung und einer als Kernstift ausgebildeten ersten Verstelleinrichtung zwischen dem geschlossenen und gespreizten Zustand verstellbar ist, in einem Längsschnitt; und
- FIGN. 5A-C: den erfindungsgemäßen Schnellmontageadapter mit dem Rotationslaser der FIG. 1A in einer ersten Position mit aufgestecktem Rotationslaser (FIG. 5A), einer zweiten Position mit fixiertem Rotationslaser (FIG. 5B) und einer dritten Position mit fixiertem und ausgerichtetem Rotationslaser (FIG. 5C).

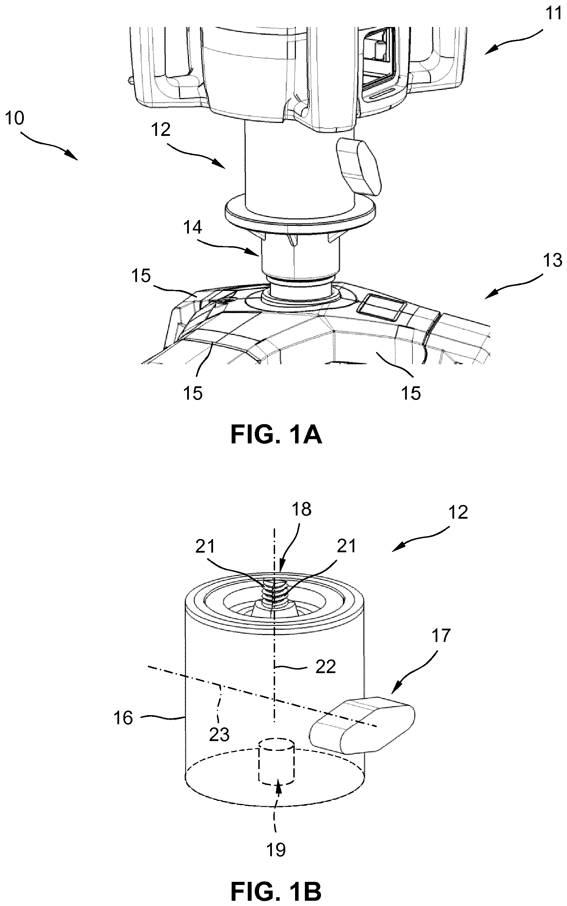

**FIG. 1A** zeigt ein Gerätesystem **10** mit einem optischen Gerät **11,** das mit Hilfe einer als Schnellmontageadapter ausgebildeten erfindungsgemäßen Vorrichtung **12** an einem Stativ **13** als Halteeinrichtung befestigt ist. Das optische Gerät 11 ist als Rotationslaser ausgebildet. Das Stativ 13 ist als Dreibeinstativ (Tripod) ausgebildet und umfasst einen Stativkopf **14** sowie drei Stativbeine **15,** die in FIG. 1A nur teilweise dargestellt sind.

Der Schnellmontageadapter 12 ist im gezeigten Ausführungsbeispiel als separater Adapter ausgebildet und über eine normierte Gewindeverbindung am Stativkopf 14 lösbar befestigt. Als Gewindeverbindungen für optische Geräte 11 haben sich zwei Gewindetypen etabliert, ein ¼-Zoll 20-Gang-Whitworth-Gewinde für kleinere optische Geräte 11 und ein %-Zoll 16-Gang-Whitworth-Gewinde für größere optische Geräte 11. Am Stativkopf 14 ist eine Stativschraube vorgesehen, die in eine passende Gewindeaufnahme am Schnellmontageadapter 12 geschraubt wird.

**FIG. 1B** zeigt den erfindungsgemäßen Schnellmontageadapter 12 der FIG. 1A in einer vergrößerten Darstellung. Der Schnellmontageadapter 12 umfasst ein Gehäuse **16,** eine Betätigungseinrichtung **17,** eine erste Verbindungseinrichtung **18,** die den Schnellmontageadapter 12 mit dem Rotationslaser 11 verbindet, und eine zweite Verbindungseinrichtung **19,** die den Schnellmontageadapter 12 mit dem Stativ 13 verbindet. Die zweite Verbindungseinrichtung 19 ist als Gewindeaufnahme ausgebildet, die mit einem komplementär ausgebildeten Gewindestift des Statives 13 die Gewindeverbindung bilden kann. Wenn der Schnellmontageadapter 12 in den Stativkopf 14 integriert ist, entfällt die zweite Verbindungseinrichtung.

Die erste Verbindungseinrichtung 18 ist als Spreizhülse ausgebildet und umfasst mehrere Spreizsegmente **21,** die eine kraft- oder formschlüssige Verbindung mit der Gewindeaufnahme des Rotationslasers 11 bilden können. Dabei ist die Spreizhülse 18 vom Bediener über die Betätigungseinrichtung 17 zwischen einem geschlossenen Zustand und einem gespreizten Zustand verstellbar, wobei die erste Verbindungseinrichtung 18 in FIG. 1B im geschlossenen Zustand dargestellt ist. Im Ausführungsbeispiel umfasst die Spreizhülse 18 drei Spreizsegmente 21, die symmetrisch um eine Längsachse **22** angeordnet sind. Die Betätigungseinrichtung 17 ist um eine Drehachse **23** verstellbar.

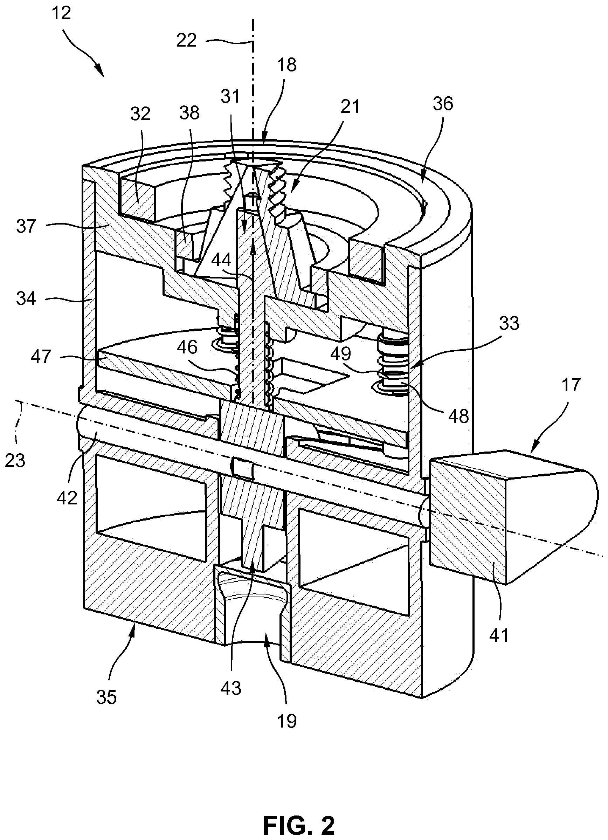

**FIG. 2** zeigt den erfindungsgemäßen Schnellmontageadapter 12 der FIG. 1B in einem Längsschnitt entlang einer Schnittebene, die die Längsachse 22 und die Drehachse 23 enthält. Der Schnellmontageadapter 12 ist über die erste Verbindungseinrichtung 18 mit dem Rotationslaser 11 und über die zweite Verbindungseinrichtung 19 mit dem Stativ 13 verbindbar.

Die als Spreizhülse ausgebildete erste Verbindungseinrichtung 18 kann vom Bediener über die Betätigungseinrichtung 17 zwischen dem geschlossenen Zustand und dem gespreizten Zustand verstellt werden. Bei geschlossener Spreizhülse kann der Rotationslaser 11 auf dem Schnellmontageadapter 12 platziert und die Spreizhülse 18 in die Gewindeaufnahme des Rotationslasers 11 eingeführt werden. Wenn der Rotationslaser 11 auf dem Schnellmontageadapter 12 platziert ist, wird die Spreizhülse 18 über die Betätigungseinrichtung 17 gespreizt, so dass der Rotationslaser 11 auf dem Schnellmontageadapter 12 fixiert ist. Die Bewegung der Betätigungseinrichtung 17 wird über eine als Kernstift ausgebildete erste Verstelleinrichtung **31** auf die Spreizsegmente 21 der Spreizhülse 18 übertragen.

Wenn der Bediener den Rotationslaser 11 nicht richtig auf dem Schnellmontageadapter 12 platziert, besteht die Gefahr, dass die Rotationsachse des Rotationslasers 11 nicht mit den Längsachsen des Schnellmontageadapters 12 und des Stativs 13 zusammenfällt, sondern gegenüber den Längsachsen geringfügig verkippt ist. Um eine Verkippung des Rotationslasers 11 gegenüber den Längsachsen zu beheben, weist der Schnellmontageadapter 12 einen Spannring **32** auf, der mittels einer zweiten Verstelleinrichtung **33** verstellbar ist.

Das Gehäuse 16 ist mehrteilig aus drei feststehenden Gehäuseteilen aufgebaut. Das erste Gehäuseteil ist als Gehäusetopf **34** ausgebildet und weist an einer Unterseite **35** die Gewindeaufnahme 19 zur Verbindung des Schnellmontageadapters 12 mit dem Stativ 13 auf. An einer, der Unterseite 35 gegenüber liegenden Oberseite **36** des Schnellmontageadapters 12 ist der Gehäusetopf mit dem, als Gehäusedeckel **37** ausgebildeten, zweiten Gehäuseteil verbunden. Der Gehäusedeckel 37 ist mehrstufig mit einer ersten Stufe und einer zweiten Stufe ausgebildet. Die Spreizsegmente 21 gleiten auf der ersten Stufe des Gehäusedeckels 37 und hintergreifen im verbundenen Zustand das ringförmig ausgebildete, dritte Gehäuseteil **38.** Der Spannring 32 liegt auf der zweiten Stufe des feststehenden Gehäusedeckels 37.

Die Betätigungseinrichtung 17 umfasst ein als Drehschalter ausgebildetes, Betätigungselement **41** und eine Welle **42,** die im Gehäusetopf 34 um die Drehachse 23 drehbar gelagert ist. Auf der Welle 42 befindet sich eine, als Exzenterscheibe ausgebildete, Steuerungsscheibe **43,** die drehfest mit der Welle 42 verbunden ist. Über die Steuerungsscheibe 43 wird eine Drehbewegung der Welle 42 um die Drehachse 23 in eine Translationsbewegung der ersten Verstelleinrichtung 31 oder eine Translationsbewegung der zweiten Verstelleinrichtung 33 entlang einer Axialrichtung **44** umgewandelt. Dabei ist die Axialrichtung 44 parallel zur Längsachse des Schnellmontageadapters 12 angeordnet.

Der Kernstift 31 ist von einem ersten Federelement **46** umgeben, das zwischen dem feststehenden Gehäusedeckel 37 und dem Kernstift 31 eingespannt ist. Wenn der Kernstift 31 in Axialrichtung 44 auf die Spreizhülse 18 zu bewegt wird, wird das erste Federelement 46 komprimiert. Das erste Federelement 46 ist als Rückstellfeder ausgebildet und sorgt dafür, dass die Spreizsegmente 21 bei der Rückbewegung des Drehschalters 41 in ihre Ausgangsposition zurück bewegt werden. Der Kernstift 31 ist von den Spreizsegmenten 21 der Spreizhülse 18 umgeben, die in einer Ebene senkrecht zur Längsachse des Kernstiftes 31 verstellbar sind. Im Ausführungsbeispiel sind drei Spreizsegmente 21 vorgesehen, die symmetrisch um die Längsachse 22 angeordnet sind.

Die zweite Verstelleinrichtung 33 umfasst eine Druckplatte **47,** die an der Steuerungsscheibe 43 anliegt, und vier Zylinderstifte **48.** Der Spannring 32 ist über die Zylinderstifte 48 mit der Druckplatte 47 verbunden und mittels der zweiten Verstelleinrichtung 33 in Axialrichtung 44 verstellbar ausgebildet. Die Zylinderstifte 48 sind von zweiten Federelementen **49** umgeben, die zwischen dem feststehenden Gehäusedeckel 37 und der verstellbaren Druckplatte 47 eingespannt sind. Wenn die Druckplatte 47 in Axialrichtung 44 auf die Spreizhülse 18 zu bewegt wird, werden die zweiten Federelemente 49 komprimiert. Die zweiten Federelemente 49 sind als Rückstellfedern ausgebildet und sorgen dafür, dass die Druckplatte 47 bei der Rückbewegung des Drehschalters 41 in ihre Ausgangsposition zurück bewegt wird.

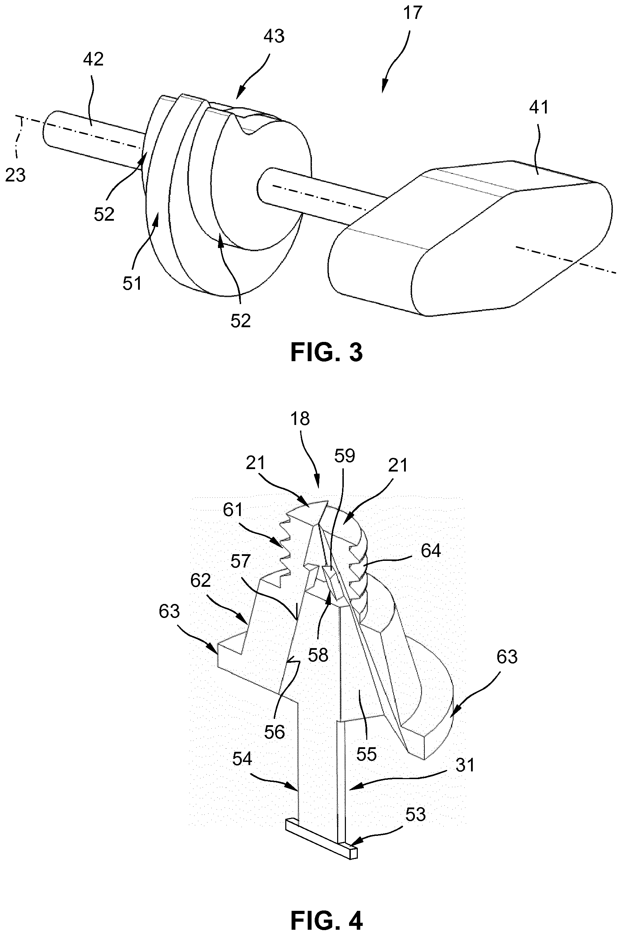

**FIG. 3** zeigt die Betätigungseinrichtung 17 des Schnellmontageadapters 12 der FIG. 1B in einer vergrößerten, dreidimensionalen Darstellung. Die Betätigungseinrichtung 17 umfasst den Drehschalter 41, die Welle 42 und die Steuerungsscheibe 43.

Die Steuerungsscheibe 43 ist drehfest mit der Welle 42 verbunden. Über die Steuerungsscheibe 43 wird eine Drehbewegung der Welle 42 um die Drehachse 23 in eine Translationsbewegung der ersten Verstelleinrichtung 31 oder eine Translationsbewegung der zweiten Verstelleinrichtung 33 entlang der Axialrichtung 44 umgewandelt. Die Steuerungsscheibe 43 umfasst einen ersten Steuerungsbereich **51,** der mit der ersten Verstelleinrichtung 31 zusammenwirkt, und einen zweiten Steuerungsbereich **52,** der mit der zweiten Verstelleinrichtung 33 zusammenwirkt. Der erste und zweite Steuerungsbereich 51, 52 sind in eine gemeinsame Steuerungsscheibe integriert. Alternativ können getrennte Steuerungsscheiben für den ersten und zweiten Steuerungsbereich vorgesehen sein, die drehfest mit der Welle 42 verbunden werden.

Der Verstellbereich der Betätigungseinrichtung 17 lässt sich in zwei Winkelbereiche unterteilen, in einem ersten Winkelbereich wird der Kernstift 31 vom ersten Steuerungsbereich 51 in Axialrichtung 44 bewegt und in einem zweiten Winkelbereich wird die Druckplatte 47 vom zweiten Steuerungsbereich 52 in Axialrichtung 44 bewegt. Dabei sind die Steuerungskurven des ersten und zweiten Steuerungsbereiches 51, 52 im Ausführungsbeispiel so aufeinander abgestimmt, dass im ersten Winkelbereich ausschließlich der Kernstift 31 und im zweiten Winkelbereich ausschließlich die Druckplatte 47 in Axialrichtung 44 bewegt wird. Der Abstand des ersten Steuerungsbereiches 51 von der Drehachse 23 nimmt im ersten Winkelbereich zu und ist im zweiten Winkelbereich; der Abstand des zweiten Steuerungsbereiches 52 von der Drehachse 23 ist im ersten Winkelbereich konstant und nimmt im zweiten Winkelbereich zu.

**FIG. 4** zeigt die Spreizhülse 18 des Schnellmontageadapters 12 der FIG. 1B, die mittels der Betätigungseinrichtung 17 und dem Kernstift 31 zwischen dem geschlossenen und gespreizten Zustand verstellbar ist, in einem Längsschnitt entlang der Schnittebene parallel zur Längsachse 22 und Drehachse 23.

Der Kernstift 31 besteht aus einem Stufenabschnitt **53,** der an der Steuerungsscheibe 43 anliegt, einem Zylinderabschnitt **54** und einem Konusabschnitt **55.** Der Stufenabschnitt 53 liegt am ersten Steuerungsbereich 51 der Steuerungsscheibe 43 an und überträgt die Drehbewegung der Steuerungsscheibe 43 auf den Kernstift 31. Der Konusabschnitt 55 ist von den Spreizsegmenten 21 der Spreizhülse 18 umgeben. Die Spreizsegmente 21 weisen an der Innenseite konische Innenflächen **56** auf, die komplementär zu konischen Außenflächen **57** des Kernstiftes 31 ausgebildet sind. Die Bewegung des Kernstiftes 31 in Axialrichtung 44 wird in eine Radialbewegung der Spreizsegmente 21 umgewandelt.

Zur Führung der Spreizsegmente 21 weisen die konischen Außenflächen 57 des Kernstiftes 31 drei schwalbenschwanzförmige Nuten **58** auf. Die konischen Innenflächen 56 der Spreizsegmente 21 weisen schwalbenschwanzförmige Vorsprünge **59** auf, die komplementär zu den Nuten 58 ausgebildet und in den Nuten 58 geführt sind. Während die Spreizsegmente 21 entlang der konischen Außenflächen 57 gleiten, sind die Spreizsegmente 21 über die Vorsprünge 59 in den Nuten 58 geführt.

Die Spreizsegmente 21 sind an der Außenseite aus mehreren Abschnitten aufgebaut und weisen einen Verbindungsabschnitt **61,** einen Mittelabschnitt **62** und einen Ringbundabschnitt **63** auf. Der Ringbundabschnitt 63 dient dazu, den Rotationslaser 11 gegen eine Translationsbewegung in Axialrichtung 44 zu sichern. Durch die Radialbewegung der Spreizsegmente 21 hintergreifen die Ringbundabschnitte 63 das feststehende dritte Gehäuseteil 38 und fixieren den Rotationslaser 11 auf dem Schnellmontageadapter 12. Der Mittelabschnitt 62 verbindet den Ringbundabschnitt 63 mit dem Verbindungsabschnitt 61, der mit der Aufnahmeöffnung des Rotationslasers 11 eine kraft- oder formschlüssige Verbindung bilden kann.

Der Verbindungsabschnitt 61 weist ein Außengewinde **64** auf, das bei geschlossener Spreizhülse 18 in eine als Gewindeaufnahme ausgebildete Aufnahmeöffnung des Rotationslasers 11 eingreifen und bei gespreizter Spreizhülse 18 mit der Gewindeaufnahme eine formschlüssige Verbindung bilden kann. Die Eigenschaften des Außengewindes 64 sind vorteilhaft an das Innengewinde der Gewindeaufnahme angepasst. Der Gewindeabschnitt der Spreizsegmente 21 kann durch einen Zylinderabschnitt ohne Gewinde ersetzt werden, wobei die Verbindung zwischen der Spreizhülse 18 und der Aufnahmeöffnung des Rotationslasers 11 in diesem Fall als kraftschlüssige Verbindung ausgebildet ist.

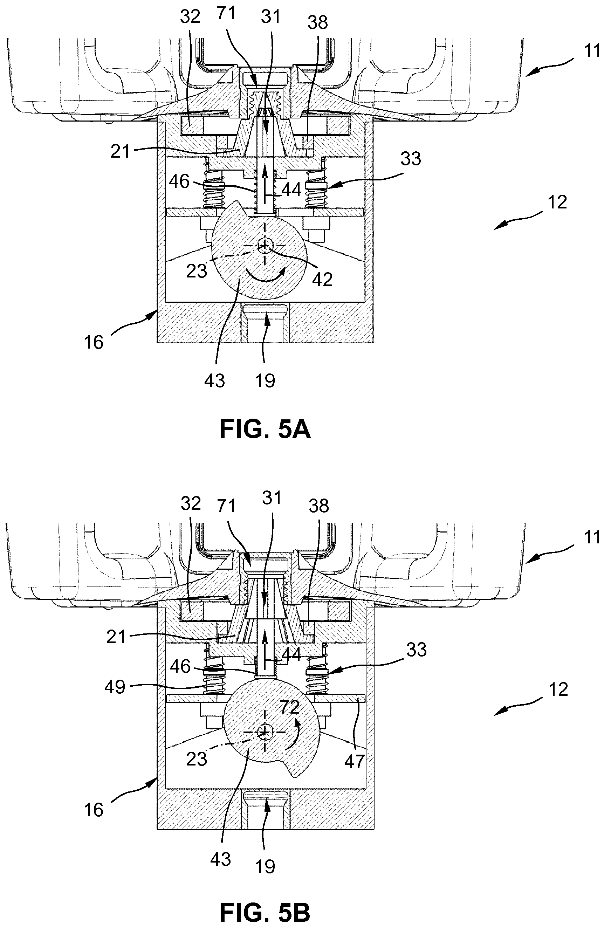

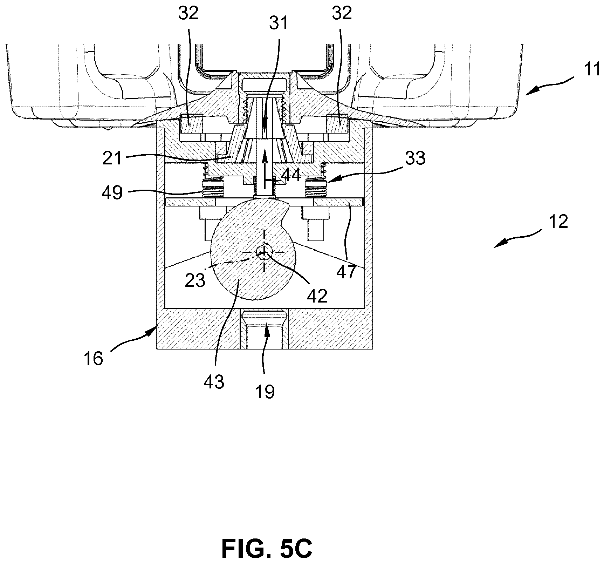

**FIGN. 5A-C** zeigen den Schnellmontageadapter 12 und den Rotationslaser 11 der FIG. 1A während der Befestigung des Rotationslasers 11 auf dem Schnellmontageadapter 12 in verschiedenen Positionen. Dabei zeigt FIG. 5A den aufgesteckten Rotationslaser 11 in einer ersten Position, FIG. 5B den fixierten Rotationslaser 11 in einer zweiten Position und FIG. 5C den fixierten und ausgerichteten Rotationslaser 11 in einer dritten Position.

FIG. 5A zeigt den Rotationslaser 11, der mit einer Aufnahmeöffnung **71** auf die Spreizhülse 18 aufgesteckt ist. Die Spreizhülse 18 ist geschlossen und die Verbindung zwischen der Spreizhülse 18 und der Aufnahmeöffnung 71 des Rotationslasers 11 ist geöffnet. Der Drehschalter 41 der Betätigungseinrichtung 17 befindet sich in der ersten Position. Um den Rotationslaser 11 auf dem Schnellmontageadapter 12 zu fixieren, bewegt der Bediener den Drehschalter 41 aus der ersten Position in einer Drehrichtung **72** um die Drehachse 23 in die zweite Position. Die Drehbewegung des Drehschalters 41 wird über die Welle 42 auf die Steuerungsscheibe 43 übertragen. Der erste Steuerungsbereich 51 der Steuerungsscheibe 43 liegt am Stufenabschnitt 53 des Kernstiftes 31 an und bewegt den Kernstift 31 in Axialrichtung 44 auf die Spreizhülse 18 zu. Die Translationsbewegung des Kernstiftes 31 in Axialrichtung 44 wird über den Konusabschnitt 55 in eine Radialbewegung der Spreizsegmente 21 umgewandelt.

Am Ende der Radialbewegung der Spreizsegmente 21 hintergreifen die Ringbundabschnitte das dritte Gehäuseteil 38 und die Gewindeabschnitte bilden mit der Aufnahmeöffnung 71 des Rotationslasers 11 eine form- und kraftschlüssige Verbindung. FIG. 5B zeigt den Rotationslaser 11, der auf dem Adapter 12 fixiert ist, in der zweiten Position. Die Spreizhülse 18 ist geöffnet und die Spreizsegmente 21 bilden mit der Aufnahmeöffnung 71 des Rotationslasers 11 eine form- und kraftschlüssige Verbindung.

Um die Längsachsen des Rotationslasers 11 und des Schnellmontageadapters 12 koaxial auszurichten, bewegt der Bediener den Drehschalter 41 aus der zweiten Position in der Drehrichtung 72 um die Drehachse 23 in die dritte Position. Die Drehbewegung des Drehschalters 41 wird über die Welle 42 auf die Steuerungsscheibe 43 übertragen. Der zweite Steuerungsbereich 52 der Steuerungsscheibe 43 liegt an der Druckplatte 47 an und bewegt den Spannring 32 parallel zur Längsachse 22 in Axialrichtung 44 auf den Rotationslaser 11 zu.

FIG. 5C zeigt den Rotationslaser 11, der auf dem Schnellmontageadapter 12 fixiert ist und dessen Rotationsachse koaxial zur Längsachse des Schnellmontageadapters 12 angeordnet ist. Mit Hilfe des Spannringes 32, der mittels der zweiten Verstelleinrichtung in Axialrichtung 44 verstellbar ist, kann eine Verkippung des Rotationslasers 11 gegenüber den Längsachsen vermieden oder zumindest behoben werden.

## Patentansprüche

1. Vorrichtung (12) zum Befestigen eines optischen Gerätes (11), das eine zylinderförmige Aufnahmeöffnung (71) umfasst, auf einer Halteeinrichtung (13), aufweisend:
▪ ein Gehäuse (16) mit mehreren Gehäuseteilen (34, 37, 38),
▪ eine Betätigungseinrichtung (17) mit einem verstellbaren Betätigungselement (41),
▪ eine Spreizhülse (18) mit mehreren Spreizsegmenten (21), die in einer Ebene senkrecht zu einer Längsachse (22) der Spreizhülse (18) zwischen einem geschlossenen Zustand und einem gespreizten Zustand verstellbar sind, und
▪ eine erste Verstelleinrichtung (31), die eine Bewegung der Betätigungseinrichtung (17) in eine Radialbewegung der Spreizsegmente (21) in der Ebene senkrecht zur Längsachse (22) der Spreizhülse (18) umwandelt,
wobei die Spreizsegmente (21) im geschlossenen Zustand der Spreizhülse (18) in die Aufnahmeöffnung (71) des optischen Gerätes (11) einführbar sind und im gespreizten Zustand der Spreizhülse (18) eine kraft- oder formschlüssige Verbindung mit der Aufnahmeöffnung (71) des optischen Gerätes (11) bilden
**dadurch gekennzeichnet, dass** die Vorrichtung (12) einen Spannring (32) und eine zweite Verstelleinrichtung (33) aufweist, wobei die zweite Verstelleinrichtung (33) eine Bewegung der Betätigungseinrichtung (17) in eine Bewegung des Spannringes (32) in Axialrichtung (44) umwandelt.

2. Vorrichtung nach Anspruch 1, **dadurch gekennzeichnet, dass** die erste Verstelleinrichtung als ein entlang einer Axialrichtung (44) verstellbarer Kernstift (31) ausgebildet ist, wobei der Kernstift (31) von den Spreizsegmenten (21) umgeben ist und die Axialrichtung (44) parallel zur Längsachse (22) der Spreizhülse (18) verläuft.

3. Vorrichtung nach Anspruch 2, **dadurch gekennzeichnet, dass** der Kernstift (31) einen Konusabschnitt (55) mit konusförmigen Außenflächen (57) aufweist und die Spreizsegmente (21) komplementär ausgebildete, konusförmige Innenflächen (56) aufweisen, wobei die Innenflächen (56) der Spreizsegmente (21) während der Bewegung des Kernstiftes (31) in Axialrichtung (44) entlang der Außenflächen (57) des Kernstiftes (31) gleiten.

4. Vorrichtung nach Anspruch 3, **dadurch gekennzeichnet, dass** der Kernstift (31) neben dem Konusabschnitt (55) einen Stufenabschnitt (53) und einen Zylinderabschnitt (54) aufweist, wobei der Zylinderabschnitt (54) von einem ersten Federelement (46), das zwischen dem verstellbaren Stufenabschnitt (53) und einem der feststehenden Gehäuseteile (37) des Gehäuses (16) eingespannt ist, umgeben ist.

5. Vorrichtung nach Anspruch 3, **dadurch gekennzeichnet, dass** die Spreizsegmente (21) an ihren Innenflächen (56) jeweils ein erstes Führungselement (59) aufweisen und der Kernstift (31) an den Außenflächen (57) komplementär ausgebildete, zweite Führungselemente (58) aufweist, wobei die Spreizsegmente (21) während der Bewegung des Kernstiftes (31) in Axialrichtung (44) mittels der ersten und zweiten Führungselemente (59, 58) geführt sind.

6. Vorrichtung nach Anspruch 5, **dadurch gekennzeichnet, dass** die ersten Führungselemente als Vorsprung (59) und die zweiten Führungselemente als komplementär ausgebildete Nuten (58) ausgebildet sind.

7. Vorrichtung nach Anspruch 1, **dadurch gekennzeichnet, dass** die Spreizsegmente (21) jeweils einen Verbindungsabschnitt (61) und einen Ringbundabschnitt (62) aufweisen, wobei die Verbindungsabschnitte (61) im gespreizten Zustand eine kraft- oder formschlüssige Verbindung mit der Aufnahmeöffnung (71) des optischen Gerätes (11) bilden und die Ringbundabschnitte (62) im gespreizten Zustand in Axialrichtung (44) eine formschlüssige Verbindung mit einem der feststehenden Gehäuseteile (38) des Gehäuses (16) bilden.

8. Vorrichtung nach Anspruch 7, **dadurch gekennzeichnet, dass** die Verbindungsabschnitte (61) der Spreizsegmente (21) ein Außengewinde (64) aufweisen, wobei das Außengewinde (64) mit einer als Gewindeaufnahme ausgebildeten Aufnahmeöffnung (71) im gespreizten Zustand eine formschlüssige Verbindung bildet.

9. Vorrichtung nach Anspruch 1, **dadurch gekennzeichnet, dass** die zweite Verstelleinrichtung (33) eine Druckplatte (47) und mehrere Zylinderstifte (48) umfasst, wobei die Zylinderstifte (48) von zweiten Federelementen (49) umgeben sind, die zwischen der verstellbaren Druckplatte (47) und einem der feststehenden Gehäuseteile (37) des Gehäuses (16) eingespannt sind.

10. Vorrichtung nach Anspruch 1, **dadurch gekennzeichnet, dass** das Betätigungselement (41) zwischen einer ersten Position, einer zweiten Position und einer dritten Position verstellbar ist, wobei die erste Verstelleinrichtung (31) die Bewegung des Betätigungselementes (41) zwischen der ersten und zweiten Position in die Radialbewegung der Spreizsegmente (21) in der Ebene senkrecht zur Längsachse (22) der Spreizhülse (18) umwandelt und die zweite Verstelleinrichtung (33) die Bewegung des Betätigungselementes (41) zwischen der zweiten und dritten Position in die Bewegung des Spannringes (32) umwandelt.

11. Vorrichtung nach Anspruch 10, **dadurch gekennzeichnet, dass** die Betätigungseinrichtung (17) eine Steuerungsscheibe (43) mit einem ersten Steuerungsbereich (51) und einem zweiten Steuerungsbereich (52) umfasst, wobei der erste Steuerungsbereich (51) den Kernstift (31) in Axialrichtung (44) bewegt und der zweite Steuerungsbereich (52) die Druckplatte (47) in Axialrichtung (44) bewegt.

12. Halteeinrichtung (13) mit einer Vorrichtung (12) zum Befestigen eines optischen Gerätes (11) nach einem der Ansprüche 1 bis 11.

13. Halteeinrichtung nach Anspruch 12, **dadurch gekennzeichnet, dass** die Vorrichtung (12) zum Befestigen eines optischen Gerätes (11) lösbar mit der Halteeinrichtung (13) verbindbar ist.

14. Halteeinrichtung nach Anspruch 12, **dadurch gekennzeichnet, dass** die Vorrichtung (12) zum Befestigen eines optischen Gerätes (11) nicht-lösbar mit der Halteeinrichtung (13) verbunden ist.

15. Verfahren zum Befestigen eines optischen Gerätes (11), das eine zylinderförmige Aufnahmeöffnung (71) umfasst, auf einem Schnellmontageadapter (12), mit den Schritten:
▪ das optische Gerät (11) wird mit der Aufnahmeöffnung (71) auf eine Spreizhülse (18) mit mehreren verstellbaren Spreizsegmenten (21) aufgesteckt, wobei sich die Spreizhülse (18) in einem geschlossenen Zustand befindet,
▪ die Spreizsegmente (21) werden mittels einer Betätigungseinrichtung (17) und einer ersten Verstelleinrichtung (31) in einer Ebene senkrecht zu einer Längsachse (22) der Spreizhülse (18) aus dem geschlossenen Zustand in einen gespreizten Zustand überführt, wobei die Spreizsegmente (21) im gespreizten Zustand mit der Aufnahmeöffnung (71) des optischen Gerätes (11) eine kraft- oder formschlüssige Verbindung bilden,
**dadurch gekennzeichnet, dass** nach dem Überführen der Spreizhülse (18) in den gespreizten Zustand ein Spannring (32) mittels der Betätigungseinrichtung (17) und einer zweiten Verstelleinrichtung (33) in einer Axialrichtung (44) parallel zur Längsachse (22) der Spreizhülse (18) auf das optische Gerät (11) zu bewegt wird.

## Claims

1. Device (12) for fastening an optical device (11), which comprises a cylindrical receiving opening (71), on a holding device (13), having:
▪ a housing (16) with several housing parts (34, 37, 38),
▪ an operating device (17) with an adjustable operating element (41),
▪ an expansion sleeve (18) with several expansion segments (21), which may be adjusted between a closed state and an expanded state in a plane perpendicular to a longitudinal axis (22) of the expansion sleeve (18), and
▪ a first adjustment device (31), which converts a movement of the operating device (17) into a radial movement of the expansion segments (21) in the plane perpendicular to the longitudinal axis (22) of the expansion sleeve (18),
in which the expansion segments (21) may be introduced into the receiving opening (71) of the optical device (11) in the closed state of the expansion sleeve (18) and form a force or form fitting connection with the receiving opening (71) of the optical device (11) in the expanded state of the expansion sleeve (18),
**characterised in that** the device (12) has a clamping ring (32) and a second adjustment device (33), in which the second adjustment device (33) converts a movement of the operating device (17) into a movement of the clamping ring (32) in an axial direction (44).

2. Device according to claim 1, **characterised in that** the first adjustment device is made as a key pin (31) that is adjustable along an axial direction (44), in which the key pin (31) is surrounded by expansion segments (21) and the axial direction (44) runs parallel to the longitudinal axis (22) of the expansion sleeve (18).

3. Device according to claim 2, **characterised in that** the key pin (31) has a cone section (55) with conical outer surfaces (57) and the expansion segments (21) have conical inner surfaces (56) that are made in a complementary way, in which the inner surfaces (56) of the expansion segments (21) glide in axial direction (44) along the outer surfaces (57) of the key pin (57) during the movement of the key pin (31).

4. Device according to claim 3, **characterised in that** apart from the cone section (55) the key pin (31) has a step section (53) and a cylindrical section (54), in which the cylindrical section (54) is surrounded by a first spring element (46), which is clamped between the adjustable step section (53) and one of the fixed housing parts (37) of the housing (16).

5. Device according to claim 3, **characterised in that** the expansion segments (21) have a first guide element (59) on their inner surfaces (56) and the key pin (31) has second guide elements (58) on the outer surfaces (57) that are made in a complementary way, in which the expansion segments (21) are guided in axial direction (44) by means of first and second guide elements (59, 58) during the movement of the key pin (31).

6. Device according to claim 5, **characterised in that** the first guide elements are made as projections (59) and the second guide elements are made as grooves (58) that are made in a complementary way.

7. Device according to claim 1, **characterised in that** the expansion segments (21) have a connecting section (61) and a ring collar section (62), in which the connecting sections (61) form a force or form fitting connection with the receiving opening (71) of the optical device (11) in the expanded state and the ring collar sections (62) form a form fitting connection with one of the fixed housing parts (38) of the housing (16) in axial direction (44) in the expanded state.

8. Device according to claim 7, **characterised in that** the connecting sections (61) of the expansion segments (21) have an outer thread (64), in which the outer thread (64) forms a form fitting connection with a receiving opening (71) that is made to receive a thread in the expanded state.

9. Device according to claim 1, **characterised in that** the second adjustment device (33) comprises a pressure plate (47) and several cylindrical pins (48), in which the cylindrical pins (48) are surrounded by two spring elements (49), which are clamped between the adjustable pressure plate (47) and one of the fixed housing parts (37) of the housing (16).

10. Device according to claim 1, **characterised in that** the operating element (41) is adjustable between a first position, a second position and a third position, in which the first adjustment device (31) converts the movement of the operating element (41) between the first and second position into the radial movement of the expansion segments (21) in the plane perpendicular to the longitudinal axis (22) of the expansion sleeve (18) and the second adjustment device (33) converts the movement of the operating element (41) between the second and third position into the movement of the clamping ring (32).

11. Device according to claim 10, **characterised in that** the operating device (17) comprises a control disc (43) with a first control area (51) and a second control area (52), in which the first control area (51) moves the key pin (31) in axial direction (44) and the second control area (52) moves the pressure plate (47) in axial direction (44).

12. Holding device (13) with a device (12) for fastening an optical device (11) according to one of claims 1 to 11.

13. Holding device according to claim 12, **characterised in that** the device (12) for fastening an optical device (11) may be connected to the holding device (13) in a detachable way.

14. Holding device according to claim 12, **characterised in that** the device (12) for fastening an optical device (11) is connected to the holding device (13) in a non-detachable way.

15. Method for fastening an optical device (11), which comprises a cylindrical receiving opening (71), on a quick assembly adapter (12) with the steps:
▪ the optical device (11) is put on an expansion sleeve (18) with several adjustable expansion segments (21) with the receiving opening (71), in which the expansion sleeve (18) is in a closed state,
▪ the expansion segments (21) are transferred from the closed state into an expanded state by means of an operating device (17) and a first adjustment device (31) in a plane perpendicular to a longitudinal axis (22) of the expansion sleeve (18), in which the expansion segments (21) form a force or form fitting connection with the receiving opening (71) of the optical device (11) in the expanded state,
**characterised in that** after transferring the expansion sleeve (18) into the expanded state a clamping ring (32) is moved by means of the operating device (17) and a second adjustment device (33) in an axial direction (44) parallel to the longitudinal axis (22) of the expansion sleeve (18) onto the optical device (11).

## Revendications

1. Dispositif (12) destiné à fixer un appareil optique (11) sur un dispositif de support (13), comprenant une ouverture de réception cylindrique (71), comportant :
▪ un boîtier (16) ayant plusieurs parties de boîtier (34, 37, 38),
▪ un dispositif d'actionnement (17) ayant un élément d'actionnement réglable (41),
▪ une douille d'expansion (18) ayant plusieurs segments d'expansion (21) qui sont réglables dans un plan perpendiculaire à une direction longitudinale (22) de la douille d'expansion (18) entre un état fermé et un état déployé, et
▪ un premier dispositif de réglage (31) qui convertit un mouvement du dispositif d'actionnement (17) en un mouvement radial des segments d'expansion (21) dans le plan perpendiculaire à l'axe longitudinal (22) de la douille d'expansion (18),
dans lequel les segments d'expansion (21) à l'état fermé de la douille d'expansion (18) peuvent être insérés dans l'ouverture de réception (71) de l'appareil optique (11) et à l'état déployé de la douille d'expansion (18) forment une liaison par force ou par complémentarité de formes avec l'ouverture de réception (71) de l'appareil optique (11),
**caractérisé en ce que** le dispositif (12) comporte une bague de serrage (32) et un second dispositif de réglage (33), dans lequel le second dispositif de réglage (33) convertit un mouvement du dispositif d'actionnement (17) en un mouvement de la bague de serrage (32) dans une direction axiale (44).

2. Dispositif selon la revendication 1, **caractérisé en ce que** le premier dispositif de réglage est configuré sous la forme d'une goupille centrale (31) réglable le long d'une direction axiale (44), dans lequel la goupille centrale (31) est entourée par les segments d'expansion (21) et la direction axiale (44) s'étend parallèlement à l'axe longitudinal (22) de la douille d'expansion (18).

3. Dispositif selon la revendication 2, **caractérisé en ce que** la goupille centrale (31) comporte une partie conique (55) avec des surfaces extérieures coniques (57) et les segments d'expansion (21) comportent des surfaces intérieures coniques (56) formées de manière complémentaire, dans lequel les surfaces intérieures (56) des segments d'expansion (21) glissent le long des surfaces extérieures (57) de la goupille centrale (31) pendant le mouvement de la goupille centrale (31) dans la direction axiale (44).

4. Dispositif selon la revendication 3, **caractérisé en ce que** la goupille centrale (31) comporte, à côté de la partie conique (55), une partie étagée (53) et une partie cylindrique (54), dans lequel la partie cylindrique (54) est entourée par un premier élément à ressort (46) qui est serré entre la partie étagée réglable (53) et l'une des parties de boîtier fixes (37) du boîtier (16) .

5. Dispositif selon la revendication 3, **caractérisé en ce que** les segments d'expansion (21) comportent respectivement, au niveau de leurs surfaces intérieures (56), un premier élément de guidage (59) et la goupille centrale (31) comporte, au niveau des surfaces extérieures (57), des seconds éléments de guidage (58) formés de manière complémentaire, dans lequel les segments d'expansion (21) sont guidés dans la direction axiale (44) pendant le mouvement de la goupille centrale (31) au moyen des premier et second éléments de guidage (59, 58).

6. Dispositif selon la revendication 5, **caractérisé en ce que** les premiers éléments de guidage sont configurés sous la forme d'une saillie (59) et les seconds éléments de guidage sont configurés sous la forme de rainures (58) formées de manière complémentaire.

7. Dispositif selon la revendication 1, **caractérisé en ce que** les éléments d'expansion (21) comportent respectivement une partie de liaison (61) et une partie de collerette annulaire (62), dans lequel les parties de liaison (61) forment, à l'état déployé, une liaison par force ou par complémentarité de formes avec l'ouverture de réception (71) de l'appareil optique (11), et les parties de collerette annulaire (62) forment, à l'état déployé dans la direction axiale (44), une liaison par complémentarité de formes avec l'une des parties de boîtier fixes (38) du boîtier (16).

8. Dispositif selon la revendication 7, **caractérisé en ce que** les parties de liaison (61) des segments d'expansion (21) comportent un filetage extérieur (64), dans lequel le filetage extérieur (64) forme une liaison par complémentarité de formes avec une ouverture de réception (71) configurée sous la forme d'un logement taraudé à l'état déployé.

9. Dispositif selon la revendication 1, **caractérisé en ce que** le second dispositif de réglage (33) comprend une plaque de pression (47) et plusieurs goupilles cylindriques (48), dans lequel les goupilles cylindriques (48) sont entourées par des seconds éléments à ressort (49) qui sont serrés entre la plaque de pression réglable (47) et l'une des parties de boîtier fixes (37) du boîtier (16).

10. Dispositif selon la revendication 1, **caractérisé en ce que** l'élément d'actionnement (41) peut être réglé entre une première position, une deuxième position et une troisième position, dans lequel le premier dispositif de réglage (31) convertit le mouvement de l'élément d'actionnement (41) entre les première et deuxième positions en mouvement radial des segments d'expansion (21) dans le plan perpendiculaire à l'axe longitudinal (22) de la douille d'expansion (18), et le second dispositif de réglage (33) convertit le mouvement de l'élément d'actionnement (41) entre les deuxième et troisième positions en mouvement de la bague de serrage (32).

11. Dispositif selon la revendication 10, **caractérisé en ce que** le dispositif d'actionnement (17) comprend un disque de commande (43) avec une première zone de commande (51) et une seconde zone de commande (52), dans lequel la première zone de commande (51) déplace la goupille centrale (31) dans la direction axiale (44) et la seconde zone de commande (52) déplace la plaque de pression (47) dans la direction axiale (44).

12. Dispositif de support (13) ayant un dispositif (12) pour fixer un appareil optique (11) selon l'une des revendications 1 à 11.

13. Dispositif de support selon la revendication 12, **caractérisé en ce que** le dispositif (12) pour fixer un appareil optique (11) peut être relié au dispositif de support (13) de manière amovible.

14. Dispositif de support selon la revendication 12, **caractérisé en ce que** le dispositif (12) pour fixer un appareil optique (11) est relié au dispositif de support (13) de manière non amovible.

15. Procédé pour fixer un appareil optique (11) comprenant une ouverture de réception cylindrique (71), sur un adaptateur de montage rapide (12), comportant les étapes consistant à :
▪ placer l'appareil optique (11) avec l'ouverture de réception (71) sur une douille d'expansion (18) ayant plusieurs segments d'expansion réglables (21), la douille d'expansion (18) étant dans un état fermé,
▪ faire passer les segments d'expansion (21) de l'état fermé à l'état déployé au moyen d'un dispositif d'actionnement (17) et d'un premier dispositif de réglage (31) dans un plan perpendiculaire à un axe longitudinal (22) de la douille d'expansion (18), les segments d'expansion (21) à l'état déployé formant une liaison par force ou par complémentarité de formes avec l'ouverture de réception (71) de l'appareil optique (11),
**caractérisé en ce qu'**après le transfert de la douille d'expansion (18) à l'état déployé, une bague de serrage (32) est déplacée sur l'appareil optique (11) au moyen du dispositif d'actionnement (17) et d'un second dispositif de réglage (33) dans une direction axiale (44) parallèle à l'axe longitudinal (22) de la douille d'expansion (18).
